(19) Europäisches Patentamt
European Patent Office
Office européen des brevets

(11) EP 0 607 939 B1

(12) EUROPÄISCHE PATENTSCHRIFT

(45) Veröffentlichungstag und Bekanntmachung des Hinweises auf die Patenterteilung:
29.04.1998 Patentblatt 1998/18

(51) Int. Cl.⁶: $C03C\ 17/36$, $G02B\ 1/10$

(21) Anmeldenummer: 94100713.0

(22) Anmeldetag: 19.01.1994

(54) **Verfahren zur Beschichtung von astronomischen Spiegeln hoher Reflektivität und astronomischer Spiegel mit einer Beschichtung und Verfahren zum Entfernen der Beschichtung**

Method of coating of highly reflective astronomical mirrors and coated astronomical mirrors and process for removing the coating

Procédé de revêtement de miroirs astronomiques à haute réflectivité et miroirs astronomiques revêtus et procédé d'élimination du revêtement

(84) Benannte Vertragsstaaten:
DE FR GB IT

(30) Priorität: 20.01.1993 DE 4301463

(43) Veröffentlichungstag der Anmeldung:
27.07.1994 Patentblatt 1994/30

(73) Patentinhaber:
Optikzentrum NRW GmbH (OZ)
44799 Bochum (DE)

(72) Erfinder:
Schmidt-Kaler, Theodor, Prof. Dr.
D-58455 Witten (DE)

(74) Vertreter:
Pfenning, Meinig & Partner
Mozartstrasse 17
80336 München (DE)

(56) Entgegenhaltungen:
EP-A- 0 341 844          EP-A- 0 456 488
FR-A- 2 658 618          US-A- 2 750 832
US-A- 3 601 471

• JOURNAL OF THE OPTICAL SOCIETY OF AMERICA Bd. 72, Nr. 1 , Januar 1982 , NEW YORK US Seiten 27 - 39 HASS 'Reflectance and Preparation of Front-Surface Mirrors, etc.'
• CHEMICAL ABSTRACTS, vol. 106, no. 16, 20. April 1987, Columbus, Ohio, US; abstract no. 124627m, Seite 312 ; & JP-A-61 284 703 (ASAHI GLASS CO., LTD.) 15. Dezember 1986

**Beschreibung**

Die Erfindung betrifft ein Verfahren zur Beschichtung von astronomischen Spiegeln hoher Reflektivität, bei dem ein die optische Kontur beinhaltender Grundkörper mit einer für die Erneuerung entfernbaren Reflexionsschicht beschichtet und mit einer Schutzschicht abgedeckt wird; außerdem betrifft die Erfindung einen astronomischen Spiegel, der aus einem Grundkörper, einer Reflexionsschicht und einer Schutzschicht besteht und ein Verfahren zum Enfernen einer Schicht.

In der Optik werden Spiegel mit einem Durchmesser ab 30 bis 50 cm bereits als große Spiegel angesehen, die zum Beispiel als $S_2$-Spiegel (Sekundärspiegel) oder $S_3$-Spiegel z.B. als Nasmyth-Spiegel an optischen Teleskopen eingesetzt werden. Für diese und andere, noch größere Spiegel (zum Beispiel der Hauptspiegel $S_1$) gilt, daß zur Erzielung einer hohen Reflektivität die verspiegelten Flächen konserviert bzw. geschützt und/oder von Zeit zu Zeit aufgearbeitet oder neu verspiegelt werden müssen. Diese Aufarbeitung wird möglichst lange hinausgeschoben und dann in der Regel an Ort und Stelle vorgenommen. Sie bedingt den Ausbau des entsprechenden Spiegels und das Vorhandensein von Verspiegelungsanlagen, die meistens aus Vakuumtanks zur Bedampfung bestehen.

Die hohe Reflektivität ist auch deshalb besonders wichtig, weil zur Ausgleichung optischer Fehler der Spiegel insgesamt vier Reflexionen bevorzugt werden (Schwarzschild-Optik), die folglich gegenüber Geräten mit zwei oder drei Spiegeln von der Reflektivität her benachteiligt sind, jedoch von der Fehlerbeseitigung her im Vorteil sind.

Früher wurde wegen der sehr guten Reflektivität als Reflexionsschicht Silber eingesetzt, das jedoch "anläuft", und zwar vor allem durch in der Umgebungsluft enthaltenes $H_2S$. Ein derartiger Spiegel kann nur dann eine vertretbare Betriebszeit mit hoher Reflektivität liefern, wenn die Silberschicht mit einer Schutzschicht überzogen wird. Dazu kann $SiO_2$, $Al_2O_3$ u.a. eingesetzt werden. Ein derartiger Spiegel kann jedoch nicht an Ort und Stelle aufgearbeitet werden, weil die Beschichtung wegen ihrer Härte mechanisch abgetragen werden muß. Das bedingt jedoch ein Neu-Polieren des optischen Grundkörpers, bevor wieder eine Reflexionsschicht aufgebracht werden kann.

Man ist daher nahezu ausschließlich dazu übergegangen, als Reflexionsschicht Aluminium zu verwenden, das ein hinreichend weites Reflexionsspektrum besitzt und zunächst eine hervorragende Reflektivität aufweist, jedoch relativ schnell "verwittert" und dabei die anfänglich hervorragende Reflektivität nach und nach verliert. Allerdings kann die Aufarbeitung in diesem Fall vor Ort vorgenommen werden, und zwar durch Abätzen der vorhandenen Aluminiumschicht und durch Aufdampfen einer neuen Aluminiumschicht im Vakuum. Diese Technologie bedingt die dauernde Bereithaltung von Vakuumtanks, die trotz langer Ruheintervalle unter Vakuum gehalten werden müssen, weil das Vakuum sonst so weit kontaminiert wird, daß es unbrauchbar ist. Solche Spiegel mit einer Aluminiumreflexionsschicht müssen normalerweise nach spätestens 1 bis 3 Jahren aufgearbeitet werden.

Aus Journal of Optical Society of America, Bd. 72, No. 1, Januar 1982, New York, US, Seiten 27 bis 39 ist von Georg Hass ein Aufbau eines Oberflächenspiegels beschrieben worden, der mit einer hohen Reflektion, verbesserter mechanischer und chemischer Langzeitbeständigkeit und besserer Haftung auf verschiedenen Substraten beschrieben ist. Dabei wird die Reflexionsschicht aus Ag, Al oder Rh gebildet und darüber eine Schutzschicht aus SiO, $SiO_2$ oder $Al_2O_3$ oder $CeO_2$ oder ZnS bzw. $MgF_2$ aufgedampft. Dort wird weiter die Verwendung einer Rh-Reflexionsschicht, die auf einer NiCr-Schicht aufgebracht wird, genannt. Dabei soll zur Erhöhung der Reflexion eine Schicht $SiO_2$ und eine Schicht $TiO_2$ oberhalb der Reflexionsschicht aufgedampft werden, um die Reflexion der Rhodiumschicht von ca. 80 % auf etwas über 90 % anzuheben.

Ein Schichtaufbau für einen Spiegel, der auf einem Glassubstrat ausgebildet wird, ist in EP 0 341 844 A2 beschrieben. Dabei wird dort vorgeschlagen eine NiCr-Schicht direkt auf das Glassubstrat, darüber eine Silberschicht und wiederum als schützende Schichten zumindest eine aus $Al_2O_3$ und/oder $SiO_2$ aufzubringen. Zur Verbesserung der Haftung soll dann zwischen der Silberschicht und der $Al_2O_3$-Schicht eine Schicht aus ZnS aufgebracht werden.

Ein halbdurchlässiger Spiegel, der elektrisch leitfähig sein soll, ist in US 2,750,832 beschrieben. Auch dabei soll auf das Substrat ein Metalloxidfilm, beispielsweise Goldoxid, Kupferoxid, Aluminiumoxid, Nickeloxid oder Chromoxid und darauf eine dünne Goldschicht, in einer transparenten Dicke aufgebracht werden, wobei der Metalloxidfilm die Haftung der Goldschicht auf dem Substrat erhöhen soll. Oberhalb der Goldschicht wird dann ein Mehrschichtaufbau aus dielektrischen Schichtmaterialien aufgebracht, wobei $TiO_2$-Schichten jeweils eine $MgF_2$-Schicht einschließen sollen.

Es ist daher Aufgabe der Erfindung, einen astronomischen Spiegel bzw. ein Verfahren zur Aufbringung und ein Verfahren zum Entfernen einer Beschichtung eines astronomischen Spiegels vorzuschlagen, bei dessen Anwendung eine Schutzschicht verwendet werden kann und dennoch die Aufarbeitung an Ort und Stelle vorgenommen werden kann, so daß Benutzungszeiten erreichbar sind, die an die längsten bisher möglichen heranreichen. Es wird auch angestrebt, daß Materialien weit besserer Reflektivität als Aluminium verwendet werden können.

Bezüglich der Verfahren und bezüglich des Spiegels wird auf die kennzeichnenden Merkmale der Ansprüche 1, 6 und 12 verwiesen.

Die Erfindung lehrt also einen Dreischichtaufbau, bei dem die äußeren Schichten die Reflexionsschicht und die Schutzschicht sind. Die innerste Schicht kann in alternativer Funktion eingesetzt werden, und je nach Einsatz als Trägerschicht oder als Sperrschicht richtet sich das Material dieser innersten Schicht. Wenn sie als Sperrschicht dienen soll, verhindert sie jeglichen Zutritt von Ätz- oder Lösungsmitteln für die Schutz- und die Reflexionsschicht zu dem Grundkörper, dessen Kontur unter gar keinen Umständen beschädigt werden darf. Bei konsequenter Gestaltung der Sperrschicht bleibt die Sperrschicht selbst unangetastet erhalten, so daß sie nicht erneuert werden muß. Es kann jedoch im Einzelfall sinnvoll sein, auch die Sperrschicht nach dem Entfernen der beiden darüber liegenden Schichten ebenfalls auf chemischem Weg zu entfernen und danach zu erneuern.

Wenn die innerste Schicht als Trägerschicht dient, ermöglicht sie quasi die Unterätzung bzw. Unterlösung der in der Regel schwer entfernbaren Schutzschicht, der damit buchstäblich der Boden entzogen wird. Weil eine seitliche, von dem Spiegelrand bzw. den Spiegelrändern her beginnende chemische Auflösung oder Zerstörung erfolgen muß, ist mit längeren Behandlungszeiten zu rechnen. Dies ist jedoch immer noch billiger als die Verbringung des Spiegels zurück zu einem Hersteller. Die Zerstörung der Trägerschicht kann allerdings beschleunigt werden, wenn es gelingt, die Schutzschicht und die Reflexionsschicht und gegebenenfalls auch die Trägerschicht vorzuschädigen, beispielsweise mit Hilfe der Elektrostriktion, der Induktion und der damit resultierenden örtlichen Erwärmung, der Beschallung zur Rißbildung, der Bestrahlung zur Hervorrufung von zu Rissen führenden Spannungen. Es besteht dann nämlich die Möglichkeit, daß ein entsprechendes Ätz- oder Lösungsmittel an sehr vielen Stellen gleichzeitig die Schutzschicht und die Reflexionsschicht unterspült und entsprechend wirksam ist. Wenn erst mehrere Ablösungsherde entstanden sind, nimmt die Auflösegeschwindigkeit der Trägerschicht nach Art einer Kettenreaktion zu.

Als Sperrschicht eignet sich besonders Gold. Es ist äußerst unanfällig gegenüber Korrosion, widersteht bis auf wenige Ausnahmen allen Ätz- und Lösungsmitteln und eignet sich hervorragend für die Bedampfung in homogenen Dicken. Besonders harmonisch dazu paßt eine Reflexionsschicht aus Silber, die bis in den Infrarotbereich hinein eine sehr hohe Reflektivität aufweist und bei Abdeckung durch eine Schutzschicht auch diese Eigenschaften auf Dauer behält. Als Schutzschicht kommen $CaF_2$, $Al_2O_3$, $SiO_2$, aber auch Metalle wie Au, Pt und Elemente wie Si und in gewissen Fällen Sulfide wie ZnS in Frage. Dabei müssen die jeweiligen Transmissionsspektren beachtet werden. Die Dicken-Variation $\Delta d$ darf $\lambda/4 = 100$ nm nicht übersteigen.

Eine dünne reine Silberschicht reflektiert bei $\lambda < 400$ nm zunehmend schlechter. Erfindungsgemäß wird deshalb nach einer Weiterbildung der Erfindung eine Reflexionsschicht vorgesehen, die aus einer im optischen Ultraviolett weitgehend transparenten Silberschicht und einer darunterliegenden Ultraviolettreflektierenden Aluminiumschicht besteht. Hierbei macht sich die Erfindung zu nutze, daß in dem angesprochenen Wellenlängenbereich eine dünne reine Silberschicht zugleich zunehmend transparent wird. Durch die zusätzliche Aluminiumschicht wird daher die Reflektivität im Bereich $\lambda = 320-400$ nm gegenüber einer reinen Silberschicht ganz erheblich erhöht, wie auch Versuche nachgewiesen haben. Außerdem verbessert die Aluminiumschicht die Haftung der Reflexionsschicht am Substrat.

Wenn ein derartig beschichteter Spiegel aufgearbeitet werden soll, was frühestens nach 10 Jahren erforderlich ist, wird die Schutzschicht mit geeigneten Chemikalien abgelöst, wobei die Sperrschicht in keinem Fall angegriffen wird, zum Beispiel wird eine $SiO_2$-Schutzschicht mit verdünnter Flußsäure abgelöst, ohne eine Gold-Sperrschicht irgendwie anzugreifen. Damit auch die Qualität des Grundkörpers erhalten bleibt, muß die Sperrschicht in jedem Fall dicht sein, weil zum Beispiel bei der Anwendung von Flußsäure eine Berührung mit dem aus Glas bestehenden Grundkörper dessen Beschädigung zur Folge hätte. Dichte Schichten lassen sich bei Gold bereits bei 50 nm erreichen, wobei weit höhere Schichtdicken zugelassen werden können.

Wenn die innerste Schicht Trägerschicht sein soll, also bei einer Aufarbeitung des Spiegels ihre Zerstörung und Auflösung beabsichtigt ist, stehen völlig andere Gesichtspunkte im Vordergrund. Insbesondere wegen der Vorschädigung der Schutzschicht ist es vorteilhaft, wenn die Haftung der Reflexionsschicht auf der Trägerschicht relativ schlecht ist und die Trägerschicht möglichst dick und weich ist. Dennoch kann selbstverständlich aus optischen Gründen nicht jede beliebige Schichtdicke gewählt werden, damit Abweichungen in der Schichtdicke von 1/8 der reflektierten Wellenlänge nicht überschritten wird. Die schlechte haftung, die Weichheit und die Dicke der Trägerschicht begünstigt bei der Aufarbeitung des Spiegels das Einreißen und lokale Abplatzen der Schutzschicht, so daß deren Durchdringung durch ein Ätzmittel über den gesamten Spiegel verteilt möglich ist, die schließlich das Abwaschen des Grundkörpers für den Neuaufbau gestattet.

Vor einem neuen Schichtaufbau muß selbstverständlich der Grundkörper bzw. die Sperrschicht, wenn sie auf dem Grundkörper geblieben ist, gründlich gereinigt werden. Danach werden die Reflexionsschicht und die Schutzschicht in üblicher Weise aufgedampft. Diese Arbeiten sind sämtlich am Ort eines Teleskopes möglich, so daß sich weite Transporte und lange Ausfallzeiten vermeiden lassen. Im übrigen muß wegen der verwendbaren Schutzschichten ein Teleskopspiegel viel weniger häufig überarbeitet werden, so daß die Betriebskosten drastisch sinken. Noch wichtiger ist jedoch der Gesichtspunkt, daß infolge der insgesamt besseren Reflektivität zur Erzielung derselben Ergebnisse verglichen mit bisher bekannten Teleskopen kleinere Einheiten eingesetzt werden können, die von den Kosten her günstiger sind. Die Kosten eines Reflexionsteleskops steigen etwa mit dem Quadrat bzw. der dritten Potenz des Durchmessers des größten Spiegels an.

Bezüglich der Reflexionsschicht sind lediglich die bekannten und heute gebräuchlichen Materialien wie Silber und Aluminium genannt worden. Selbstverständlich kann die Reflexionsschicht auch aus anderen Materialien bestehen, z.B. auch eine Multilayerschicht aus dielektrischen Komponenten sein, wenn sie auf großen Spiegeln aufbringbar ist. Diesbezüglich ist die Erfindung keineswegs festgelegt. Dies gilt ebenso für die Materialien der Schutzschicht und der Trägerschicht.

Silizium bildet mit dem atmosphärischen Sauerstoff eine monomolekulare Grenzschicht SiO, die gegen die aggressiven Bestandteile der Atmosphäre sehr beständig ist. Sie ist mit ihrem aufgeweiteten Diamant-Gitter überdies sehr hart. Die beiden Schichten können sowohl chemisch entfernt als auch aufgebracht werden.

Im folgenden werden wesentliche Vorteile des erfindungsgemäßen Spiegels mit drei Schichten bzw. der erfindungsgemäßen Beschichtung detailliert dargestellt.

Die Reflektivität des Dreischicht-Silber-Spiegels ist mit der Reflektivität der gegenwärtig benutzten, an freier Atmosphäre alternden aluminisierten Spiegel zu vergleichen, für die man unter den heute üblichen Umständen R = 0,8 für den gesamten O-IR-Bereich ansetzen muß. Damit erweist sich der geschützte Silberspiegel im Bereich von 0,333 $\mu$m bis in FIR als überlegen.

Selbst wenn man nur wenig gealterte und sehr gut gepflegte, konventionelle Al-bedampfte Spiegel mit R = 0,87 (Geyer 1979) zum Vergleich heranzieht, verlagert sich dieser Bereich nur im nahen UV auf 0,337 $\mu$m. Da die atmosphärische Extinktion die astronomische Messung bei 0,32 $\mu$m auch an hochgelegenen Oberservatorien praktisch abschneidet, liefert der geschützte Ag-Spiegel nur in dem sehr schmalen und für terrestrische Beobachtung ohnehin sehr schwierigen Spektralbereich von 0,32 - 0,34 $\mu$m schlechtere Resultate. Im Blauen (0,42 - 0,48 $\mu$m) dagegen realisiert er mit R = 0,995 geradezu ideale Bedingungen für eine Schwarzschild-Optik mit einem Gesamtverlust von nur 2 %. Im Infrarot ist er selbst dem frischen, vollkommen unoxidierten Al-Spiegel bei allen Wellenlängen überlegen.

Die erhöhte Reflektivität entspricht einer direkten Kostenersparnis beim erforderlichen Durchmesser D des Hauptspiegels. Bei einem klassischen Ritchey-Chretien-Zweispiegelsystem entspricht der Gewinn von 0,98/0,8 = 1,22 im Bereich 0,4 - 10 $\mu$m einer Reduktion von D um diesen Faktor, was wegen der Kosten-Durchmesser Relation $P \sim D^{2,6}$ (Lena 1988) einer Kostenersparnis vom Faktor 1,7 entspricht. Bei einem System mit Nasmyth-Fokus ($S_3$) erhöht sich dieser Faktor auf 2,2, bei einer Schwarzschild-Optik mit vier Reflektionen auf 3. Nimmt man für Groß-Teleskope neuer Bauart die Preis-Durchmesser-Relation $P \sim D^{1,8}$ an (Schmidt-Kaler 1992), so ergibt sich für die 3- bzw. 4-Spiegel-Optik immer noch die Ersparnis um den Faktor 1,7 bzw.

2,2. Außerdem entfallen die bei großen neuen Teleskopen enormen Investitions- und Betriebskosten für die riesigen Bedampfungs-Anlagen.

Vorteile

Das erfindungsgemäße Verfahren ermöglicht, ausgehend von der beschichtungsgerechten Gestaltung eines Trägersubstrats und dessen Vorbehandlung, mittels eines Drei-Schichten-Aufbaus

(1) den beständigen Schutz witterungsempfindlicher Reflektormaterialien und
(2) deren einfache chemische Entschichtung und Wiederbeschichtung.

Es wird eine Spiegelbeschichtung

- hoher Reflektivität R > 0,95 im Bereich $\lambda$ = 0,3 bis 20 $\mu$m
- mit langfristiger Stabilität (Dauer $\geq$ 20 Jahre)
- robust genug für oft wiederholte effektive Oberflächenreinigung
- ablösbar ohne jede Verletzung des Spiegelsubstrats

erzielt.

Eine Beschichtung dieser Art läßt großen wirtschaftlichen Nutzen erwarten und ist nicht auf den Bereich der terrestrischen oder Weltraum-Astrooptik beschränkt, sondern hat weitere Anwendungsgebiete. Die Reflektivität läßt Vierspiegeloptiken vom Schwarzschild-Typus zu mit Bildfeldern von über $1^0$, die völlig frei von den Seidelschen Abbildungsfehlern 3. Ordnung sind ($S_I = S_{II} = S_{III} = S_{IV} = 0$) und sehr kompakt ausgestaltet werden können. Damit eröffnen sich für die Entwicklung der Teleskop-Optik völlig neue Perspektiven. Darüber hinaus wird die Nachweis-Empfindlichkeit bestehender Teleskope typisch um 50 % gesteigert. Die Kombination Quarz/Silber/Gold stellt eine aussichtsreiche Realisierung eines solchen Dreischichtaufbaus dar.

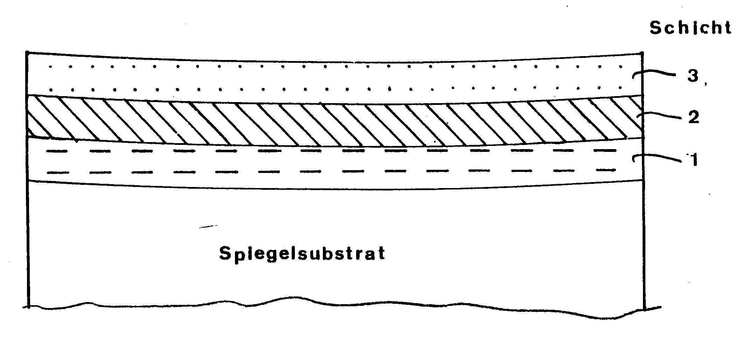

Ein Ausführungsbeispiel eines erfindungsgemäß beschichteten Spiegelelements ist in der Zeichnung im Querschnitt dargestellt. Der 3-Schichten-Aufbau des Spiegelsubstrats umfaßt eine Schicht 1 aus einem chemisch ablösbaren Trägermaterial, eine Schicht 2, die optisch wirksam ist, und eine Schicht 3, die eine optisch unwirksame Schutzschicht darstellt.

Die Ablösung der Schicht 1 geschieht, wie bereits beschrieben, durch langsames chemisches Angreifen von den Seiten her, das heißt die Schichten 2 und 3 werden von unten her mit abgetragen.

Das Ausführungsbeispiel verdeutlicht jedoch auch einen 3-Schichten-Aufbau, bei dem Schicht 1 eine Sperrschicht ist, während die Schichten 2 und 3 wiederum die optisch wirksame Schicht und die optisch unwirksame Schutzschicht bilden.

In diesem Falle erfolgt die Ablösung in zwei chemischen Schritten. Zunächst werden Schicht 3 und eventuell auch 2 von oben her chemisch abgetragen. Schicht 1 wird hiervon nicht betroffen, sie dient für diesen ersten Prozeß als Reaktionsstopper. Anschließend wird die reflektierende Schicht 2 chemisch abgetragen. Danach wird in einem zweiten (oder dritten) Prozeß mit einer anderen Chemikalie Schicht 1 chemisch abgetragen (falls überhaupt notwendig).

**Patentansprüche**

1. Verfahren zur Beschichtung von astronomischen Spiegeln hoher Reflektivität, bei dem ein eine optische Kontur beinhaltender Grundkörper mit einer erneuerbaren Reflexionsschicht (2), auf die direkt anschließend an die Reflexionsschicht (2) eine diese abdeckende Schutzschicht (3) mittels eines PVD-Verfahren aufgebracht wird,
   **dadurch gekennzeichnet,**

   - daß eine weitere Schicht (1) unmittelbar auf den Grundkörper unmittelbar unter der Reflexionsschicht (2) aufgebracht wird,

   - wobei die weitere Schicht (1) ohne Beschädigung der Kontur des Grundkörpers chemisch ablösbar ist (Funktion einer Trägerschicht) oder die weitere Schicht (1) gegenüber für die Reflexionsschicht (2) und die Schutzschicht (3) geeigneten chemischen Ablösemitteln beständig ist (Funktion einer Sperrschicht).

2. Verfahren nach Anspruch 1,
   dadurch gekennzeichnet, daß die Sperrschicht (1) vor dem erneuten Aufbringen der Reflexionsschicht (2) gesäubert wird.

3. Verfahren nach Anspruch 1 oder 2,
   dadurch gekennzeichnet, daß die Sperrschicht (1) nach dem Entfernen der Reflexionsschicht (2) ebenfalls entfernt und danach erneuert wird.

4. Verfahren nach Anspruch 1,
   dadurch gekennzeichnet, daß die über der Trägerschicht (1) liegende Reflexionsschicht (2) und Schutzschicht (3) durch Elektrostriktion, Induktion, Beschallung, Bestrahlung physikalisch vorgeschädigt werden und anschließend die Trägerschicht (1) chemisch restlos entfernt wird.

5. Verfahren nach Anspruch 4,
   dadurch gekennzeichnet, daß die Schutzschicht (3) vorgeschädigt wird und das die Reflexionsschicht (2) als Trägerschicht chemisch restlos entfernt wird.

6. Astronomischer Spiegel mit hoher Reflektiviät, der in der Astronomie verwendbar ist, bei dem auf einen Grundkörper eine Reflexionsschicht (2) und

direkt darauf eine Schutzschicht (3) mittels eines PVD-Verfahrens aufgebracht ist, dadurch gekennzeichnet,

   - daß eine unmittelbar auf den Grundkörper und unmittelbar an die Reflexionsschicht (2) angrenzende weitere Schicht (1) aufgebracht ist,

   - die bei einer Erneuerung der Reflexionsschicht (2) ohne Beschädigung der Kontur des Grundkörpers entweder chemisch ablösbar ist (Trägerschicht) oder unversehrt bleibt (Sperrschicht).

7. Spiegel nach Anspruch 6,
   dadurch gekennzeichnet, daß die Sperrschicht (1) aus Gold besteht und mit einer Dicke von mindestens 50 nm aufgebracht ist.

8. Spiegel nach Anspruch 6 oder 7,
   dadurch gekennzeichnet, daß die Schutzschicht (3) aus $CaF_2$, $Al_2O_3$ oder $SiO_2$ besteht.

9. Spiegel nach einem der Ansprüche 6 bis 8,
   dadurch gekennzeichnet, daß die Reflexionsschicht (2) aus Silber besteht.

10. Spiegel nach Anspruch 6,
    dadurch gekennzeichnet, daß die Reflexionsschicht (2) aus einer im optischen ultraviolett weitgehend transparenten Silberschicht und einer darunter liegenden ultraviolett reflektierenden Aluminiumschicht besteht.

11. Spiegel nach einem der Ansprüche 6 bis 10,
    dadurch gekennzeichnet, daß die Dickenschwankung jeder Schicht kleiner als 50 nm ist.

12. Verfahren zum Entfernen einer Reflexionsschicht (2) und einer darüber angeordneten Schutzschicht (3) eines astronomischen Spiegels hoher Reflektivität,
    dadurch gekennzeichnet, daß eine direkt auf den Grundkörper unmittelbar unter der Reflexionsschicht (2) angeordnete weitere Schutzschicht (1) ohne Beschädigung der Kontur des Grundkörpers entweder mit der Reflexionsschicht (2) und der Schutzschicht (3) chemisch abgelöst wird (Funktion einer Trägerschicht) oder gegenüber den Ablösemitteln für die Reflexionsschicht (2) und die Schutzschicht (3) unversehrt bleibt (Funktion einer Sperrschicht).

**Claims**

1. Process for coating astronomic mirrors of high reflectivity, in which a base body containing a renewable optical contour with a renewable reflective layer (2) onto which directly adjacent to the reflective layer (2) is applied by means of a PVD process a protective layer which covers it, **characterised in that**

- a further layer (1) is applied directly onto the base body directly below the reflective layer (2);
- and the further layer (1) is, without damaging the contour of the base body, chemically detachable (function of a carrier layer), or the further layer (1) is resistant to chemical means of detachment for the reflective layer (2) and the protective layer (3) (function of a blocking layer).

2. Process according to Claim 1, **characterised in that** the blocking layer (1) is cleaned prior to application of the reflective layer (2).

3. Process according to Claim 1 or 2, **characterised in that** the blocking layer (1) is also removed after removal of the reflective layer (2) and then renewed.

4. Process according to Claim 1, **characterised in that** the reflective layer (2) located above the carrier layer (1) and the protective layer (3) are physically predamaged by electro striction, induction, sound, radiation, and thereafter the carrier layer (1) is chemically removed in its entirety.

5. Process according to Claim 4, **characterised in that** the protective layer (3) is predamaged, and the reflective layer (2) as a carrier layer is chemically removed in its entirety.

6. Astronomic mirror of high reflectivity for use in astronomy having a reflective layer (2) applied to a base body, and directly thereonto a protective layer (3) by means of a PVD process, **characterised in that**

- a further layer (1) is applied which is directly adjacent to both the ground base and directly to the reflective layer (2);
- which is during renewal of the reflective layer (2) either chemically detachable (carrier layer) without damage to the contour of the base body or remains undamaged (blocking layer).

7. Mirror according to Claim 6, **characterised in that** the blocking layer (1) is made of gold and applied with a thickness of at least 50 nm.

8. Mirror according to Claim 6 or 7, **characterised in that** the protective layer (3) is composed of $CaF_2$,

$Al_2O_3$ or $SiO_2$.

9. Mirror according to one of Claims 6 to 8, **characterised in that** the reflective layer (2) is made of silver.

10. Mirror according to Claim 6, **characterised in that** the reflective layer (2) is composed of a silver layer which is extensively transparent in optical ultraviolet and therebelow an ultraviolet reflecting aluminium layer.

11. Mirror according to one of Claims 6 to 8, **characterised in that** the fluctuation in thickness of each layer is less than 50 nm.

12. Process for removal of a reflective layer (2) and a thereabove arranged protective layer (3) of an astronomic mirror of high reflectivity, **characterised in that** an additional protective layer (1) positioned directly on the base body directly below the reflective layer (2) is without damage of the contour of the base body chemically detached either with the reflective layer (2) and the protective layer (3) (function of a carrier layer) or remains unharmed relative to the detaching means for the reflective layer (2) and the protective layer (3) (function of a blocking layer).

## Revendications

1. Procédé pour le revêtement de miroirs possédant une capacité élevée de réflexion, dans lequel un corps de base contenant un contour optique est muni d'une couche de réflexion renouvelable (2) sur laquelle est appliquée au moyen d'un procédé PVD, immédiatement après l'application de la couche de réflexion (2), une couche de protection (3) recouvrant celle-ci, caractérisé en ce que :

- on applique une couche supplémentaire (1) directement sur le corps de base, immédiatement en dessous de la couche de réflexion (2),
- la couche supplémentaire (1) pouvant être enlevée chimiquement, sans endommagement du contour du corps de base (fonction d'une couche de support), ou la couche supplémentaire (1) étant résistante à des agents d'enlèvement chimique adaptés pour la couche de réflexion (2) et pour la couche de protection (3) (fonction d'une couche de blocage).

2. Procédé selon la revendication 1, caractérisé en ce qu'avant la nouvelle application d'une couche de réflexion (2) la couche de blocage (1) est nettoyée.

3. Procédé selon la revendication 1 ou 2, caractérisé en ce qu'après l'enlèvement de la couche de réflexion (2), la couche de blocage (1) est également enlevée et est ensuite renouvelée.

4. Procédé selon la revendication 1, caractérisé en la couche de réflexion (2) se trouvant au-dessus de la couche de support (1) et la couche de blocage (3) sont au préalable endommagées physiquement par électrostriction, par induction, par traitement acoustique ou par rayonnement, et sont ensuite entièrement enlevées de la couche de support (1) de façon chimique.

5. Procédé selon la revendication 4, caractérisé en ce que la couche de protection (3) est préalablement endommagé, et en ce que la couche de réflexion (2) en tant que couche de support est entièrement enlevée de façon chimique.

6. Miroir astronomique ayant une capacité élevée de réflexion, qui peut être utilisé dans l'astronomie, dans lequel une couche de réflexion (2) est appliquée sur un corps de base et immédiatement sur celle-ci une couche de protection (3) au moyen d'un procédé PVD, caractérisé en ce que :

   - une couche supplémentaire (1) est appliquée directement sur le corps de base et de façon contigue à la couche de réflexion (2), lors du renouvellement de la couche de réflexion (2), la couche supplémentaire pouvant être enlevée sans endommagement du contour du corps de base soit par voie chimique (couche de support) ou reste intact (couche de blocage).

7. Miroir selon la revendication 6, caractérisé en ce que la couche de blocage (1) est constituée d'or ayant une épaisseur d'au moins 50nm.

8. Miroir selon la revendication 6 ou 7, caractérisé en ce que la couche de blocage (3) est réalisée en $CaF_2$, $Al_2O_3$ ou en $SiO_2$.

9. Miroir selon l'une quelconque des revendications 6 à 8, caractérisé en ce que la couche de réflexion (2) est réalisée en argent.

10. Miroir selon la revendication 6, caractérisé en ce que la couche de réflexion (2) est réalisée en une couche d'argent dans une large mesure transparente dans le domaine des ultraviolets optiques et d'une couche d'aluminium disposée en dessous et réfléchissant les ultraviolets.

11. Miroir selon l'une quelconque des revendications 6 à 10, caractérisé en ce que les variations d'épaisseur de chaque couche sont inférieures à 50nm.

12. Procédé d'enlèvement d'une couche de réflexion (2) et d'une couche de protection (3) disposée sur la couche de réflexion d'un miroir astronomique ayant une capacité élevée de réflexion, caractérisé en ce qu'une couche supplémentaire (1) appliquée directement sur le corps de base, immédiatement en dessous de la couche de réflexion (2) est enlevée sans endommagement du contour du corps de base par voie chimique (fonction d'une couche de support) ou reste intact par rapport à des agents d'enlèvement chimique adaptés pour la couche de réflexion (2) et pour la couche de protection (3) (fonction d'une couche de blocage).

Schicht

3

2

1

Spiegelsubstrat

8